# EUROPEAN PATENT APPLICATION

(11) **EP 1 944 700 A1**
(43) Date of publication of application: **16.07.2008**
(21) Application number: 07000414.8
(22) Date of filing: 10.01.2007
(51) Int. Cl.: G06F 17/00

(54) **Method and system for real time interactive video**

(71) Applicant: Imagetech Co., Ltd., 106 Taipei T'ai pei (TW)
(72) Inventor: Lin, San Wei, Yilan County 265 (TW); Chen, Peng Wei, Taipei County 221 (TW); Lin, Chih-Mao, Keelung City 200 (TW); Weng, Chen-Hsiu, Taipei County 235 (TW); Kuo, Yon-Fon, Taichung City 400 (TW); Wang, Chuan-Hong, Taipei City 100 (TW); Li, Tsai-Yen, Taipei City 116 (TW); Liao, Wen-Hung, Taipei City 116 (TW)
(74) Representative: Manasse, Uwe

(57) **Abstract**

A method and a system for real time interactive video include a display device having a frame, a live person, a computing machine having at least one processor, a memory, and a program, and a capture device. The program provides media content and effect track script. The capture device receives a live person image and integrates the live person image with the effect track script, and the program finally displays the outputs of the synthesized media content and the integrated live person image and effect track script on the frame at real time.

## Description

### BACKGROUND OF THE INVENTION

### Field of the Invention

The present invention relates to a method and a system for producing video, and more particularly to a method and a system for producing real-time interactive video.

### Description of the Related Art

As video devices including digital cameras, webcams, camera mobile phone become low-priced and popular, an integration of a household computer and electronic consumer products becomes an irresistible trend. However, the present video multimedia applications are restricted to static images only, and focused on the storage and file management of captured pictures accompanied with the basic image processing and simple image synthesis functions. As to dynamic video devices used simply and primarily for video recording, file transfer and playback and any other function used together with a network for real time video transmissions, the dynamic video devices seldom create or modify the multimedia contents. Although some game software attempt to integrate user's body movements into interactive games, there are limitations on understanding different levels of a sport mode and the design of a script for a game also has substantial limitations, and thus the variety of contents of the games is limited as well.

Further, the content of special effects commonly seen in television requires high costs for the software and hardware as well as professional knowledge, and thus special effects become a professional area with a very high entry. Besides, actors and actress have to act with their imagination, and that is a big test for them, and it also makes the production more difficult.

In view of the shortcomings of the prior art, the inventor of the present invention based on years of experience in the related industry to conduct extensive researches and experiments, and finally designed and developed a method and a system for real time interactive video in accordance with the present invention.

### Summary of the Invention

Therefore, it is a primary objective of the present invention to overcome the shortcomings of the prior art that requires a complicated process for the creation of digital contents by providing a method and a system for real time interactive video. The invention provides a user-friendly man-machine interface and allows users to create rich digital contents with a low price.

Another objective of the present invention is to use the concept of an interactive effect track and real time operation to add special effect elements other than audio and video tracks of the original movie. Unlike the special effects of a movie, the special effects of the present invention can be produced at real time, and the applied target is not selected in advance but varies with the interaction.

To achieve the foregoing objectives, the present invention provides a method and a system for real time interactive video include a display device having a frame, a live person, a computing machine having at least one processor, a memory, and a program, and an capture device. The program is used to provide media content and effect track script. The capture device is used to capture a live person image, and finally the live person image is integrated with the effect track script and synthesized with media content, and the processing output is displayed on the frame at real time.

### BRIEF DESCRIPTION OF THE DRAWINGS

FIG. 1 is a schematic view of a structure in accordance with a preferred embodiment of the present invention;
FIG. 2 is a schematic view of a file structure in accordance with a preferred embodiment of the present invention;
FIG. 3A and 3B are schematic views of a real time playback that combines an actual captured live person and a virtual reality world;
FIG. 4 is a preliminarily selected continuous view of a preferred embodiment that adopts a horizontal edge density computation in accordance with the present invention; and
FIG. 5 is a flow chart of a software operation in accordance with a preferred embodiment of the present invention.

### DETAILED DESCRIPTION OF THE PREFERRED EMBODIMENTS

The objectives, shape, structure, apparatus, characteristics and effects of the present invention will become apparent by the detail description together with the accompanying drawings. Of course, some of the elements of the present invention may be substituted by their equivalents, and the detailed description of preferred embodiments given in the specification illustrates the structure of the invention.

A method and a system for real time interactive video comprise: a display device having a frame, a live person, a computing machine having at least one processor, a memory, and a program, and an capture device. The program provides media content and effect track script. The capture device is used to capture a live person image and the live person image is integrated with the effect track script and media content. The media content can include a virtual character. The program finally displays the outputs of the synthesized media content and the integrated live person image and effect track script on the frame at real time. The virtual character can interact with the live image on the frame.

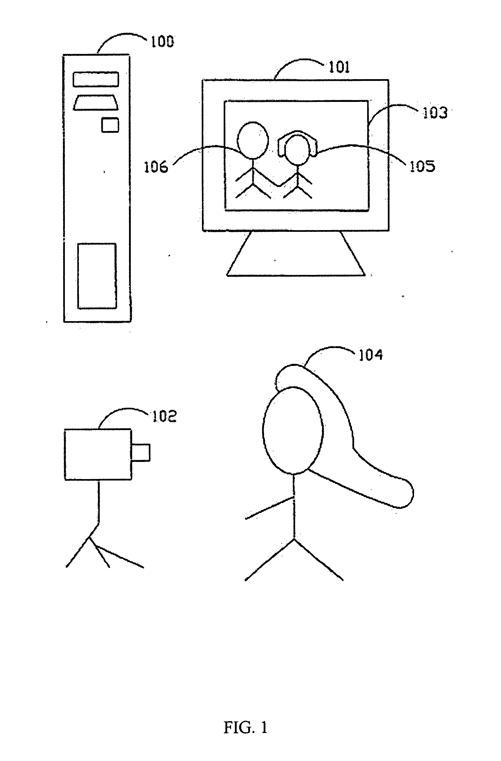

Referring to FIG. 1 for a preferred embodiment of the present invention, a machine having a processor and a memory is provided, and the machine can be a personal computer, a set top box, a game console or a mobile phone, and the machine of this embodiment is a computer system 100. A display device such as a cathode ray tube (CRT) monitor, a liquid crystal display (LCD) panel 101 or a plasma panel is provided, and the display device of this embodiment is an LCD panel. An capture device is also provided, and the capture device is a webcam 102 in this embodiment. It is noteworthy to point out that the computer system 100, the LCD panel 101 and the webcam 102 of this embodiment are connected by either a cable or a wireless transmission method. Of course, the invention is not limited to such arrangement only, and the main system can integrate with the display device such as a notebook computer or a flat panel computer which is connected to an capture device.

In a live recording as shown in FIG. 1, a webcam 102 shoots a live person 104, and the webcam 102 captures an image of the live person 104 and displays the image on a frame 103 of the LCD panel 101. A live person image 105 is displayed in the frame 103, and the live person image 105 shows the live person who appears in front of the webcam 102 (or whose image enters into the lens). In a preferred embodiment, a pre-selected mode produces a virtual reality character 106 interacted with the live person image 105. It is noteworthy to point out that the live person 104 is displayed on a frame at real time to become the live person image 105, and "real time" here refers to the synchronization of the movements of the live person 104 and the live person image 105. Further, a scene where the live person 104 is located and the interaction between with the virtual reality character 106 and the live person image 105 are not preset, but is selected by a user through a menu or a similar interface. The pre-selected mode could be a coded application program stored in a memory such as a memory of the computer system 100.

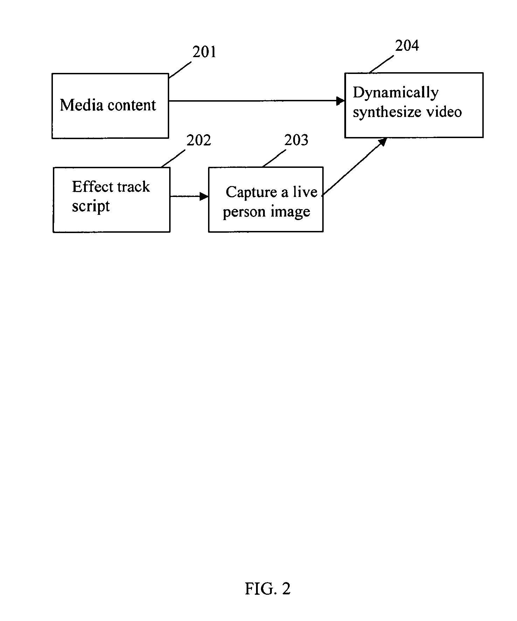

Referring to FIG. 2 for a file structure in accordance with a preferred embodiment of the present invention, the pre-selected mode is composed of a body content and an effect script file. In this embodiment, a media content 201 is drafted first and integrated with a script to produce a multimedia content such as pop music, old songs or classic music. An effect track script 202 corresponding to a preinstalled interactive effect includes basic information such as a time parameter, a relative space parameter, an effect type, and an effect applying target. The effect track script 202 is described by a specific language and saved as a script file. Users can design different themes according to factors like sex and age to go with different special effects. For instance, the same body content can go with several effect scripts, such that when a pop music is played, the corresponding special effect can load a virtual reality character. In the method of integrating data during the playback, a user downloads a media content 201 and an effect track script 202, and then captures a live person image 203. An capture device is used to capture a real time movie such as a live person image 105 which is integrated and streamed with the effect track script 202 and finally synthesized into a dynamic video 204, and the synthesized dynamic video 204 is streamed with the real time captured movie and the effect track script 202 are synthesized with the media content 201, so as to show the effect of the live person merged into the virtual reality world.

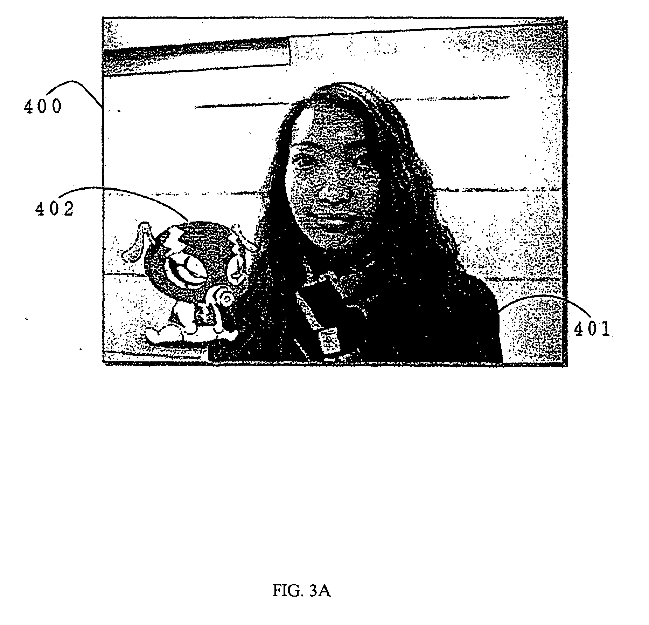

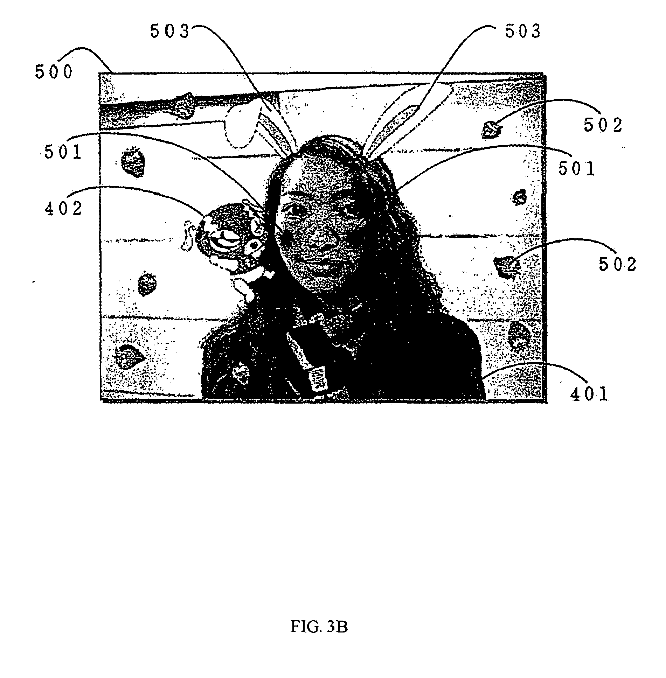

Referring to FIGS. 3A and 3B for schematic views of a real time playback that combines an actual captured live person and a virtual reality world, an capture device (not shown in the figures) captures a live person image and the live person image is displayed on a frame 400 of a display device. The frame shows a live person image 401. When a readable program of this embodiment is executed, a pre-selected mode will produce a virtual reality image such as a portrait, a God statue, a cartoon character, a monster or a virtual reality character 402.

The virtual reality character 402 will interact with the live person image 401 and be displayed on the frame 400 at real time as shown in FIG. 3B, and the virtual reality character 402 can be moved slightly to the left or right. In the preferred embodiment, the movement of the virtual reality character 401 is to climb to the shoulders of the live person image 401 and kiss the cheeks of the live person image. In response with the movements of the virtual reality character 402, the live person image 402 produces a blush effect 501 and a joy effect 502. In another example, the virtual reality character 402 can cast a spell or practice a witchcraft on the live person image 401. To respond to the movement of the virtual reality character 402, the live person image 401 grows a pair of ears 503 on the head of the live person image 401, and when the head of the live person image 401 moves slightly, the ears 503 will move accordingly, so that the virtual reality character 402, the live person 401 and various different ef fects are interactive. In this embodiment, the virtual reality character 402 casts a spell on the live person image 401, and the head of the live person image 401 grows a pair of ears. Technically, a recognition technology is adopted to confirm the position of the hair of the live person image 401, and then the pair of ears with special effects are added onto the hair, such that an interactive effect between the live person and the virtual reality object will be produced by repeated recognitions and tracking.

As to the live person, the live person image can be divided into an upper-half body mode or a full body mode, and the upper-half body mode only includes the portion of the head and shoulders of the live person displayed on the frame, and the full body mode displays approximately 70% of the length of the full body of the live person. However, it is very difficult to concurrently achieve the real time effect and the accuracy for the interactive digital content, and the embodiments of the present invention make appropriate modifications according to their applications. When the invention is applied for shooting a dynamic video close up of the head, for example, facial features are mainly used for detecting and positioning a head, and the motion mode primarily uses simple parameters estimation of a full-range movement, and the full body mode uses the tracking of a regional movement and the recognition of a configuration as key points for the interactive mode.

In the method for interacting a virtual reality character with a live person, the analysis method includes a feature detection, a feature tracking, a gesture analysis and recognition for analyzing the action between the virtual reality character and the live person. The feature detection considers the capture of a low-level feature (such as a feature point) and a high-level feature (such as the eyes and mouths of the face feature), and the method of matching the features include an implicit method and an explicit method. The explicit feature matching method searches for a one-to-one correspondence among features, and the implicit feature matching method uses parameters or transformations to represent the relation between the features in the frame. For example, the explicit method and the low-level features can be matched by feature points (such as a limb tracking); the explicit method and the high-level features can be analyzed by facial expressions; the implicit method and the low-level features can be analyzed by a dense optical flow; and the implicit method and the high-level feature can be a face/organ detection and positioning.

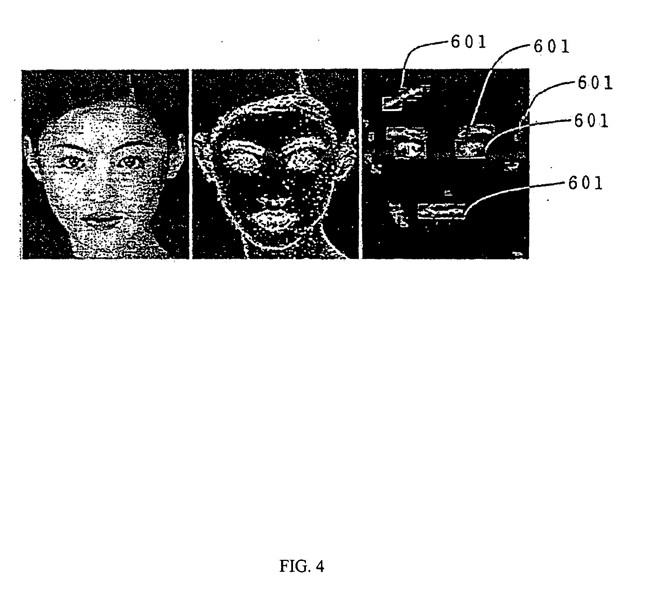

In the feature detection, the following methods are used for detecting a face and positioning an organ precisely. At the beginning of the detection according to a preferred embodiment, the density of a horizontal edge in a gray-level video is used to estimate possible positions of an eye and a mouth. Referring to FIG. 4 for a preliminarily selected continuous view of a preferred embodiment that adopts a horizontal edge density computation in accordance with the present invention, a candidate area 601 is a possible position selected for the eye and the mouth. In many candidate areas 601, the relative position and proportion of the organ are used for the further selection. Finally, the eyeball search is used for confirming the location. In a preferred embodiment, the skin color can be used as a supplement and a basis for the decision. In a preferred embodiment, the positioning of an organ such a noise, an eyebrow and an ear is used for estimating a position by proportion. An external frame of a human face is represented by an elliptic equation. In an operation at a full body mode according to a preferred embodiment, a skin color model together with a hair-like feature detector is used for a quick detection. As to other portions, we use low-level grouped features for the description.

In a feature tracking operated at an upper-half body mode according to a preferred embodiment, we focus on the continuous positioning of an organ on a face and the estimation of a movement parameter in the whole block. As to the full body mode according to a preferred embodiment, a grouped graph matching method is used for comparing and tracking the features, and dynamically adjusting the number of the feature points depending on the computing resources. It is noteworthy to point out that the face of the live person according to this embodiment should accommodate itself in the camera lens of the capture device instead of requiring the camera lens of the capture device to track the face of the live person, and thus there is no need of considering the pose estimation.

In a preferred embodiment, a gesture analysis and recognition and a still object configuration can be determined by a shape matching, and related technologies including shape context and its algorithm can be an elastic matching algorithm working together with a multi-resolution concept to tolerate a slight deformation and a slight occlusion effect. For the analysis and recognition of continuous movements in accordance with a preferred embodiment, a pyramidal optical flow is used for computing the moving direction and speed of a human body, and the time sequence method adopted in a preferred embodiment is a hidden Markov model (HMM) or a recurrent neural network (RNN) for analyzing the significance of the movements.

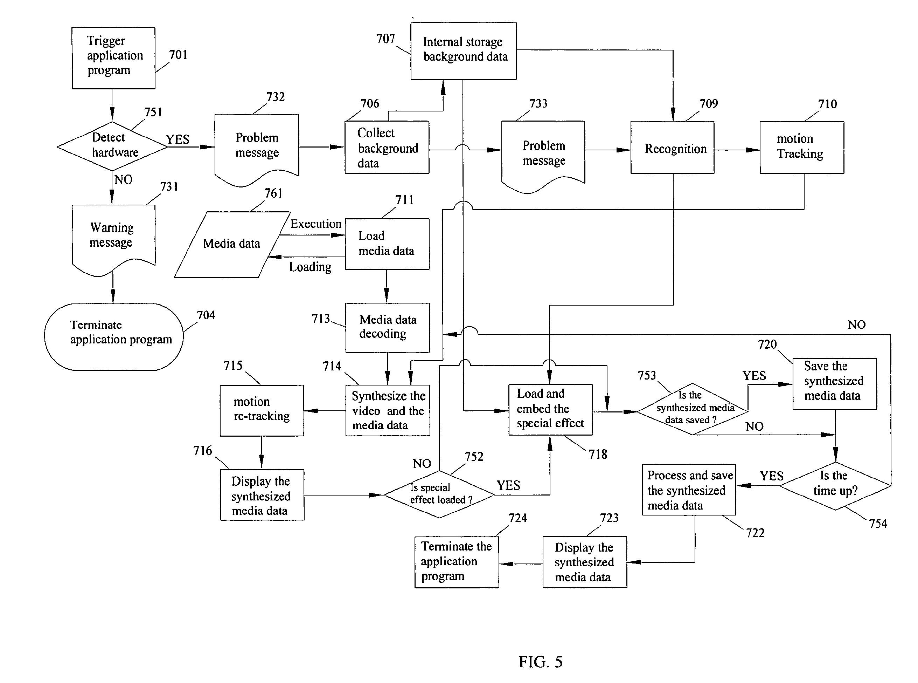

Referring to FIG. 5 for a flow chart of a software operation in accordance with a preferred embodiment of the present invention, first, triggering a application program (step 701), detecting a hardware (step 751), providing a warning message (step 731), terminating the application program (step 704), and providing a problem message (step 732) are required steps for the program to test and confirm the hardware. If a problem is detected in the step of detecting a hardware (step 751), then a warning message will be issued or else a problem message will be issued. The warning message is provided for warming users that a necessary hardware device has not been installed or cannot be operated during the hardware detection. The warning message may be a message indicating no installation of the capture device or an incomplete or improper installation of a lens of the capture device, and the problem message is provided for reminding users to leave the camera alone and start the preparation of capturing images, collecting a background data (step 706) and saving it into an internal background storage data (step 707), and then issuing the problem message (step 733) for inviting the user back into the camera. For instance, a welcoming screen appears to invite the user to enter into the camera and its video will be displayed on the frame.

A recognition (step 709) is provided here for recognizing a face and a whole body, and a motion tracking (step 710) is provided for detecting the movements of the face and the whole body. Further, the media data is provided (step 761), the media data can includes a file with a file extension in AVI or MPEG format is provided. In a preferred embodiment, the media content can be a compressed file such as a DDL file. The media data is loaded (step 711) and decoded (step 713), and then the recognition (step 709), the tracking (step 710) and the internal storage background data (step 707) are working with the following steps to produce a synthesized dynamic video.

After the image captured by the capture device and the media data are synthesized (step 714) and the motion re-tracking (step 715) is carried out, the synthesized media data will be displayed (step 716). The re-tracking of the movement (step 715) is performed again to detect a change of the background and the image, and then determine whether or not a special effect is loaded (step 752); if yes, then loading and adopting the special effect (step 718) is performed. In a preferred embodiment, the loaded special effect has a level of "CEffect", and then the step of determining whether or not the synthesized media data is saved (step 753) is performed; if yes, then the synthesized media data will be saved (step 720). Then, the step of determining whether or not the time is up is performed (step 754); if yes, then the synthesized media data will be processed and saved again (step 722). In a preferred embodiment, the synthesized media data is in a JPEG file format or a CStyle level. Finally, the re-processed synthesized media data is displayed (step 723), and the application program is terminated (step 724).

It is noteworthy to point out that after the synthesized video of the capture device and the media data is processed by the motion re-tracking (step 715), the synthesized media data will be displayed on the frame (step 716), and then the special effect will be loaded (step 718). After the synthesized media data is saved (step 720), the process will enter into a loop to the synthesized video of the capture device and the media data (step 714), so as to produce a real time effect. Referring to FIGS. 3A and 3B, the positions of shoulders and face of the live person image 401 can be obtained after the virtual character 402 has gone through the step of the motion re-tracking (step 715). The blush effect 501 as shown in FIG. 3B will appear after the blush effect 501 has gone through the step of saving the synthesized media data (step 720) and the motion re-tracking (step 715). Since the motion re-tracking (step 715) is performed, the blush effect 501 can be produced at the correct position regardless of the location where the face is moved.

The foregoing preferred embodiment illustrates the flow chart of a software operation of the present invention, and the invention also can use a personal computer (PC or laptop), a set top box, a game console or a mobile phone for the execution. In the applications, two players can play a game through a network such as the Internet or an intranet. The players can select a virtual reality character from either the player side or the opponent side to give an instruction and remotely control the virtual reality character at another end, so as to provide various different visual effects and the result can be displayed on the display device of either side.

In summation of the description of the foregoing embodiments, both interactivity of the application program and trueness of the synthesized effect are taken into consideration for designing the special effect module and interactive module and combining the modules into a package, such that the media content can be compiled first, and system resources can be fully utilized for the interaction and trueness.

While the invention has been described by means of a specific numerous modifications and variations could be made thereto by those skilled in the art without departing from the scope and spirit of he invention set forth in the claims.

## Claims

1. A method for real time interactive video, comprising the steps of:
providing a frame;
receiving a video in real time and displaying said video on said frame;
producing an object displayed on said frame; and
performing an interaction between said object sand said video.

2. The method for real time interactive video of claim 1, wherein said step of receiving said video uses a webcam to receive an image facing said webcam.

3. The method for real time interactive video of claim 1, wherein said step of producing an object further comprises a pre-selected mode for producing a corresponding object.

4. The method for real time interactive video of claim 1, wherein said step of performing an interaction further comprises a step of recognizing the position of said video.

5. The method for real time interactive video of claim 1, wherein said step of performing an interaction further comprises a step of tracking of a change of said video.

6. The method for real time interactive video of claim 1, wherein said step of performing an interaction further comprises a step of producing an effect track script to said video.

7. The method for real time interactive video of claim 1, wherein said effect track script is selected from an effect instruction set described by a script language.

8. The method for real time interactive video of claim 1, wherein said object is selected from a media content.

9. The method for real time interactive video of claim 1, wherein said step of producing an object further comprises an image provider existed in front of a capture device electrically connected to said frame.

10. The method for real time interactive video of claim 1, wherein said step of producing an object further comprises a feature tracking based on said video.

11. The method for real time interactive video of claim 1, wherein said step of producing an object further comprises a gesture analysis and recognition based on said video.

12. A storage device, for storing a plurality of programs read by a media processor,
wherein said media processor bases on said plurality of programs to execute a procedure comprising the steps of:
inputting a data that includes a background data and a real time video;
recognizing said data;
tracking the portion of a change of said data;
providing a media content;
synthesizing said media content and said data; and
displaying said synthesized media content and said data.

13. The storage device, for storing a plurality of programs read by a media processor of claim 12, wherein said step of providing a media content further comprises the steps of:
loading said media content; and
decoding said media content.

14. The storage device, for storing a plurality of programs read by a media processor of claim 12, wherein said step of synthesizing said media content and said data further comprising the step of tracking the portion of a change of said data again.

15. The storage device, for storing a plurality of programs read by a media processor of claim 12, further comprising the steps of:
loading a special effect;
processing and synthesizing said media content, said data and said special effect; and
displaying said synthesized media content, said data and said special effect.

16. The storage device, for storing a plurality of programs read by a media processor of claim 15, wherein said step of loading a special effect further comprises the step of embedding said special effect into said background data.

17. A system for real time interactive video, comprising:
a display device, having a frame;
a computing machine, having at least one processor, a memory and a plurality of
readable programs, and said plurality of readable programs have a media content and an effect track script; and
a capture device, for receiving an image which is processed by said special effect instruction and synthesized with said media content, so as to display said media content and said video interactively on said frame.

18. The system for real time interactive video of claim 17, wherein said display device is a liquid crystal display.

19. The system for real time interactive video of claim 17, wherein said computing machine is a computer.
